# EUROPEAN PATENT SPECIFICATION

(11) **EP 3 527 902 B1**
(45) Date of publication and mention of the grant of the patent: **10.08.2022**
(21) Application number: 16918481.9
(22) Date of filing: 11.10.2016
(51) Int. Cl.: F24F 7/10, F24F 1/0314, F24F 11/88, F24F 11/89, F24F 12/00, F24F 1/20, F24F 1/22

(54) **VENTILATION DEVICE**
VENTILATIONSVORRICHTUNG
DISPOSITIF DE VENTILATION

(43) Date of publication of application: 21.08.2019
(73) Proprietor: Mitsubishi Electric Corporation, Chiyoda-ku Tokyo 100-8310 (JP)
(72) Inventor: KATO, Shinya, Tokyo 102-0073 (JP); AOKI, Hiroki, Tokyo 100-8310 (JP); IIDA, Satoshi, Tokyo 100-8310 (JP); INOGUCHI, Tomo, Tokyo 100-8310 (JP)
(74) Representative: Witte, Weller & Partner Patentanwälte mbB
(86) International application number: PCT/JP2016/080122
(87) International publication number: WO 2018/069964

(56) References cited:
- EP-A1- 2 835 590
- CN-U- 203 722 014
- JP-A- H08 261 509
- JP-A- H10 176 854
- JP-A- 2003 269 768
- JP-A- 2013 148 225
- JP-A- 2014 149 106
- JP-A- 2015 049 025
- JP-A- 2015 200 430

## Description

### Field

The present invention relates to a ventilator that ventilates indoor air with outdoor air.

### Background

Patent Literature 1 discloses a ventilator that includes a terminal block for connecting an external power supply line in order to operate the ventilator. In the ventilator disclosed in Patent Literature 1, the terminal block for connecting an external power supply line is mounted in parallel to an outer surface of an electrical equipment box.

Patent Literature 2, according to its abstract, relates to an air conditioner that accommodates an electric component box in which a terminal block case including a terminal block mounting portion for mounting a terminal block to which a power source line and a signal line is connected in advance, and an earth plate mounting portion for mounting an earth plate at a lower portion of the terminal block mounting portion are arranged in its front part. The terminal block case is provided with a power source line passage for wiring and guiding a power supply line to between the terminal block mounting portion and one of a right and left wall surfaces, to the earth plate mounting portion, and to a cutout portion provided on a back surface of the earth plate mounting portion.

### Citation List

### Patent Literature

Patent Literature 1: Japanese Patent Application Laid-open No. 2014-149106
Patent Literature 2: JP 2015 049025 A

### Summary

### Technical Problem

However, when a terminal block is mounted in parallel to an outer surface of an electrical equipment box as in the invention disclosed in Patent Literature 1, it is necessary to include a wiring space for bending an external power supply line at a curvature at which disconnection does not occur when the external power supply line is connected.

The present invention has been made in view of the above, and an object of the present invention is to obtain a ventilator in which a wiring space is reduced as compared with a case where a terminal block is mounted in parallel to an outer surface of an electrical equipment box.

### Solution to Problem

In order to solve the above-mentioned problem and achieve the object, there is provided a ventilator according to claim 1. Said ventilator includes: an electrical equipment box including an electrical equipment case in which an electronic component that drives blowers is disposed; and an electrical equipment cover that covers the electrical equipment case and the electronic component. The ventilator includes a terminal block mounting plate to which a terminal block is mounted, the terminal block includes: an external power supply line connection terminal that connects an external power supply line at one end portion; and an internal electric wire connection terminal that connects an internal electric wire connected to the electronic component at the other end portion. The terminal block mounting plate includes a terminal block mounting surface that holds the terminal block in a state where a direction in which a side surface on a side of the one end portion of the terminal block faces has an angle with respect to an outer surface of the electrical equipment box in a direction external to the electrical equipment box, and a direction in which a side surface on a side of the other end portion of the terminal block faces has an angle with respect to the outer surface in a direction internal to the electrical equipment box. The ventilator comprises a cord clip to fix the external power supply line. The cord clip fixes the external power supply line to be perpendicular to the outer surface. The external power supply line is held in a state where a portion connected to the external power supply line connection terminal has an angle with respect to the outer surface in a direction external to the electrical equipment box.

### Advantageous Effects of Invention

The ventilator according to the present invention achieves an effect of reducing a wiring space as compared with a case where a terminal block is mounted in parallel to an outer surface of an electrical equipment box.

### Brief Description of Drawings

FIG. 1 is an exploded perspective view of a ventilator according to an embodiment of the present invention.
FIG. 2 is a perspective view of an electrical equipment box and a terminal block box of the ventilator according to the embodiment.
FIG. 3 is a side view of the electrical equipment box and the terminal block box of the ventilator according to the embodiment.
FIG. 4 is a plan view of the terminal block box of the ventilator according to the embodiment.
FIG. 5 is a view illustrating the electrical equipment box and the terminal block box of the ventilator according to the embodiment as viewed from a front side of the terminal block.
FIG. 6 is a view illustrating the electrical equipment box and the terminal block box of the ventilator according to the embodiment as viewed from a front side of a cord clip.

### Description of Embodiments

Hereinafter, a ventilator according to an embodiment of the present invention will be described in detail with reference to the drawings. The invention is not limited to the embodiment.

### Embodiment.

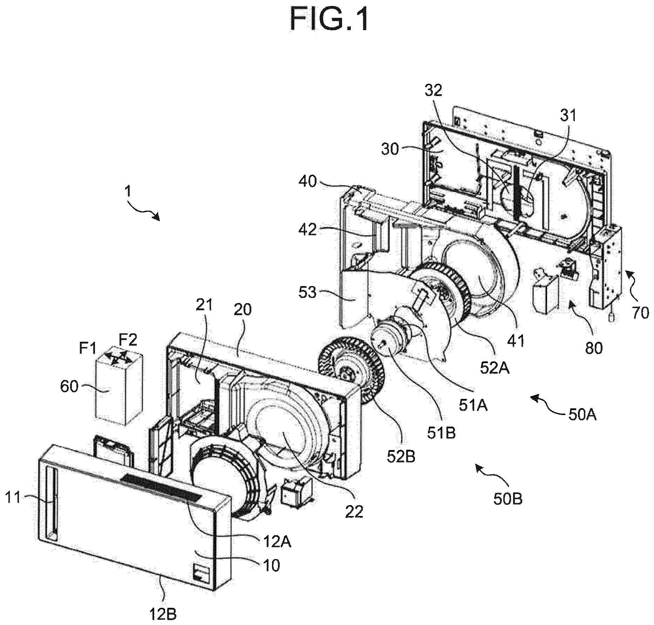

FIG. 1 is an exploded perspective view of a ventilator according to an embodiment of the present invention. The ventilator 1 is a wall-mounted ventilator mounted to a wall surface in a room, and it includes a front panel 10, a front casing 20, a back casing 30, an inner casing 40, blowers 50A and 50B, a heat exchanger 60, an electrical equipment box 70, and a terminal block box 80.

The front panel 10 is detachably attached to an anterior side of the front casing 20. The front panel 10 includes: an indoor air outlet 11 for blowing out outdoor air on a front surface thereof; and indoor air inlets 12A and 12B for drawing in indoor air on upper and lower surfaces thereof.

In the front casing 20, a supply air opening 21 that communicates with the indoor air outlet 11 of the front panel 10 and an exhaust air opening 22 that communicates with the indoor air inlets 12A and 12B are formed.

The back casing 30 is mounted to a rear side of the front casing 20, and an outdoor air inlet 31 for drawing in outdoor air and an outdoor air outlet 32 for blowing out indoor air are formed therein.

The inner casing 40 is mounted between the front casing 20 and the back casing 30, and it includes: a supply air flow path 41 for flowing outdoor air from the outdoor air inlet 31 to the supply air opening 21; and an exhaust air flow path 42 for flowing indoor air from the exhaust air opening 22 to the outdoor air outlet 32.

The blowers 50A and 50B are mounted to the inner casing 40. The blower 50A is arranged at a position facing the outdoor air inlet 31, and it generates a supply air flow that flows through the supply air flow path 41. On the other hand, the blower 50B is arranged at a position facing the exhaust air opening 22, and it generates an exhaust air flow that flows through the exhaust air flow path 42. The blower 50A includes a motor 51A and an impeller 52A. The blower 50B includes a motor 51B and an impeller 52B. The motors 51A and 51B are mounted to a motor mounting plate 53. The motor mounting plate 53 is mounted to the back casing 30 with the inner casing 40 interposed therebetween, and the front casing 20 is mounted to the back casing 30 so as to cover the periphery thereof, thereby separating the exhaust air flow and the supply air flow.

The heat exchanger 60 performs heat exchange between the supply air flow flowing through the supply air flow path 41 and the exhaust air flow flowing through the exhaust air flow path 42. The heat exchanger 60 has a rectangular parallelepiped shape and has a structure in which air flows only in a direction that connects facing side surfaces. Specifically, the heat exchanger 60 has a structure in which air flows only in an arrow F1 direction and an arrow F2 direction in FIG. 1. The heat exchanger 60 is held by the inner casing 40, and regarding two surfaces thereof located on a side of the blowers 50A and 50B, the supply air flow flows therein from one surface and the exhaust air flow flows therein from the other surface. Because a top portion and a bottom portion of the heat exchanger 60 are in contact with the inner casing 40, the supply air flow and the exhaust air flow are isolated without being mixed with each other.

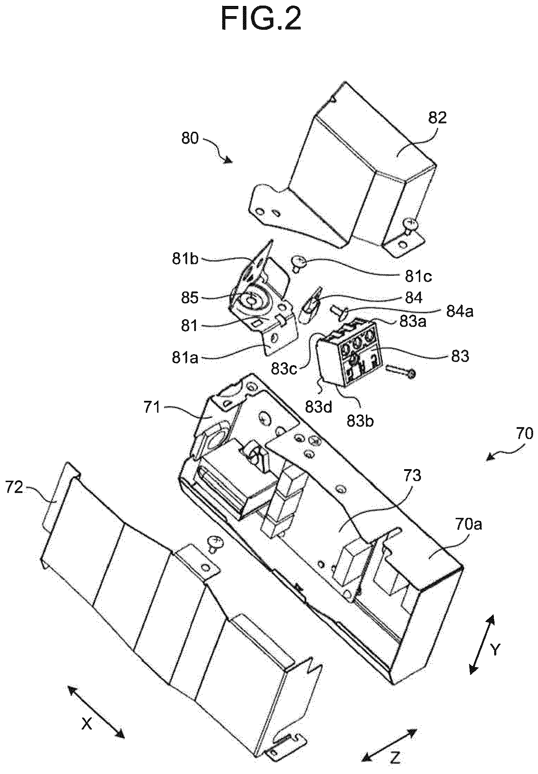

The electrical equipment box 70 is accommodated between the front casing 20 and the back casing 30. FIG. 2 is a perspective view of the electrical equipment box and the terminal block box of the ventilator according to the embodiment. The electrical equipment box 70 includes: an electrical equipment case 71 in which an electronic substrate 73 as an electronic component that drives the blowers 50A and 50B is disposed; and an electrical equipment cover 72 that covers the electrical equipment case 71 and the electronic substrate 73. Electronic components other than the electronic substrate 73 may be disposed in the electrical equipment case 71.

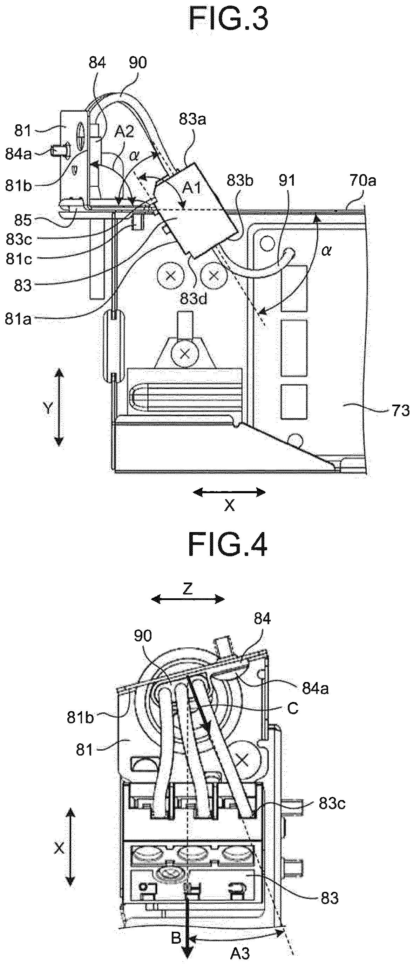

FIG. 3 is a side view of the electrical equipment box and the terminal block box of the ventilator according to the embodiment. FIG. 3 illustrates the electrical equipment box and the terminal block box as viewed from a direction along a Z direction in FIG. 2. In FIG. 3, the electrical equipment cover 72 and a terminal block cover 82 are not illustrated. A terminal block mounting plate 81 is mounted to an outer surface 70a of the electrical equipment box 70 with a screw 81c. The terminal block box 80 includes: a terminal block 83 to which an external power supply line 90 is connected; a cord clip 84 that fixes the external power supply line 90; the terminal block mounting plate 81 to which the terminal block 83 is mounted, wherein the terminal block 83 includes an external power supply line connection terminal 83c that connects the external power supply line 90 at one end portion and an internal electric wire connection terminal 83d that connects an internal electric wire 91 connected to the electronic substrate 73 at the other end portion; a cord bushing 85 as a path for drawing the external power supply line 90 into the terminal block box 80 from the outside; and the terminal block cover 82 that covers the terminal block 83 and the cord clip 84. The cord clip 84 is also mounted to the terminal block mounting plate 81 by a screw 84a. Here, directions in which the outer surface 70a extends are defined as an X direction and a Z direction. A direction perpendicular to the outer surface 70a is defined as a Y direction.

The terminal block mounting plate 81 includes a terminal block mounting surface 81a and a cord clip mounting surface 81b that respectively form an angle A1 and an angle A2 with respect to the outer surface 70a, when the terminal block mounting plate 81 is mounted to the outer surface 70a. Therefore, the cord clip 84 fixes the external power supply line 90 in a state where a side thereof connected to the external power supply line connection terminal 83c has an angle in a direction external to the electrical equipment box 70. Here, the angle A2 is an angle within an XY plane around an axis extending in the Z direction. The terminal block mounting surface 81a and the cord clip mounting surface 81b can be formed by bending a sheet metal material, but they may be formed by other methods.

On the terminal block mounting plate 81, the terminal block 83 is mounted to be inclined with respect to the outer surface 70a such that: a direction in which a side surface 83a on a side of the one end portion that includes the external power supply line connection terminal 83c, that is, one end portion-side side surface 83a, faces has an angle α with respect to the outer surface 70a in a direction external to the electrical equipment box 70; and a direction in which a side surface 83b on a side of the other end portion that includes the internal electric wire connection terminal 83d, that is, other end portion-side side surface 83b, faces has the angle α with respect to the outer surface 70a in a direction internal to the electrical equipment box 70. The angle of the direction in which the one end portion-side side surface 83a faces with respect to the outer surface 70a in the direction external to the electrical equipment box 70, and the angle of the direction in which the other end portion-side side surface 83b faces with respect to the outer surface 70a in the direction internal to the electrical equipment box 70 may have different degrees. Here, the angle of the direction in which the one end portion-side side surface 83a faces with respect to the outer surface 70a in the direction external to the electrical equipment box 70, and the angle of the direction in which the other end portion-side side surface 83b faces with respect to the outer surface 70a in the direction internal to the electrical equipment box 70 are each an angle within the XY plane around the axis extending in the Z direction. The external power supply line 90 passes through the cord bushing 85, is drawn into the terminal block box 80, and is fixed by the cord clip 84. The external power supply line 90 is bent from the position fixed by the cord clip 84 and is connected to the terminal block 83.

The direction in which the one end portion-side side surface 83a of the terminal block 83 faces has an angle with respect to the outer surface 70a in the direction external to the electrical equipment box 70, so that the external power supply line 90 can be connected to the terminal block 83 without being bent. Therefore, as compared with a case where the terminal block 83 is mounted in parallel to the outer surface 70a, a mounting space can be reduced in the X direction in parallel to the outer surface 70a, and the wiring space can be reduced. In addition, by bending the external power supply line 90 between the terminal block 83 and the cord clip 84, when the external power supply line 90 is pulled outside the terminal block box 80, a force is applied such that the external power supply line 90 bites in the cord clip 84, and accordingly, holding of the external power supply line 90 with the cord clip 84 becomes stronger, and the effect of preventing the external power supply line 90 from coming off is enhanced. Furthermore, by the terminal block 83 and the cord clip 84 being mounted with the angle A1 and the angle A2 with respect to the outer surface 70a, respectively, as compared with a case where the terminal block 83 and the cord clip 84 are mounted in parallel to the outer surface 70a, a mounting space can be reduced in the X direction in parallel to the outer surface 70a, and the wiring space can be reduced.

The terminal block 83 is held by the terminal block mounting plate 81 in a state where the other end portion is entered into the electrical equipment box 70, and the one end portion is protruding from the electrical equipment box 70. By the other end portion of the terminal block 83 is entered into the inside of the electrical equipment box 70 beyond the outer surface 70a, a mounting space in the Y direction perpendicular to the outer surface 70a can be reduced, and the wiring space can be reduced.

The other end portion of the terminal block 83 and the internal electric wire 91, which a worker does not need to touch at the time of power supply wiring, are protected by the outer surface 70a and prevented from being touched by the worker, and thereby working safety is improved. Furthermore, a distance between the internal electric wire connection terminal 83d provided at the other end portion of the terminal block 83 and the electronic substrate 73 is shortened, and accordingly, the length of the internal electric wire 91 can be shortened to achieve cost reduction.

The other end portion of the terminal block 83 is not necessarily is entered into the electrical equipment box 70.

FIG. 4 is a plan view of the terminal block box of the ventilator according to the embodiment. FIG. 4 illustrates the terminal block box as viewed from a direction along the Y direction in FIG. 2. An XZ plane direction component of a normal to the cord clip mounting surface 81b forms an angle A3 with respect to an XZ plane direction component of a normal of the terminal block mounting surface 81a. Therefore, a front direction of the terminal block 83 indicated by an arrow B in FIG. 4 and a front direction of the cord clip 84 indicated by an arrow C in FIG. 4 form the angle A3. Here, the angle A3 is an angle within an XZ plane around an axis extending in the Y direction. The cord clip mounting surface 81b can be formed by bending a sheet metal material, but it may be formed by other methods.

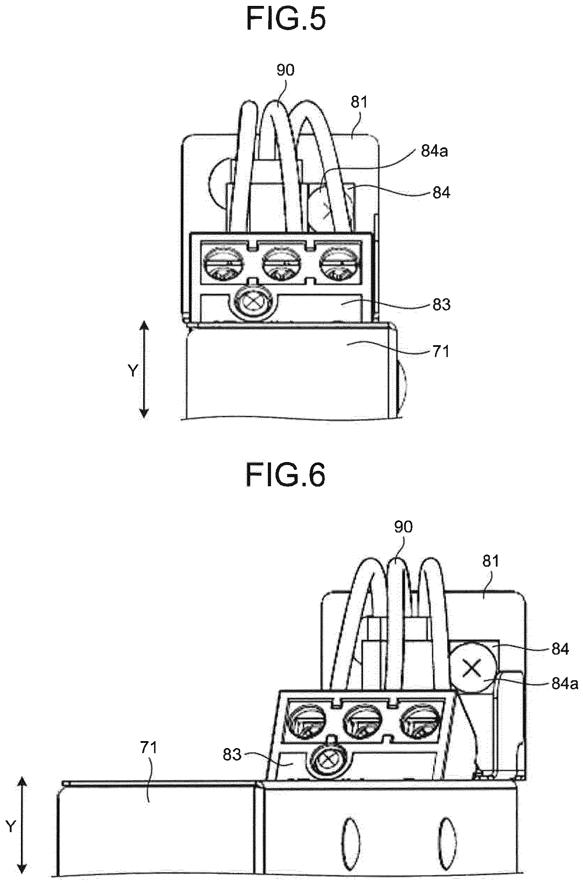

FIG. 5 is a view illustrating the electrical equipment box and the terminal block box of the ventilator according to the embodiment as viewed from a front side of the terminal block. FIG. 6 is a view illustrating the electrical equipment box and the terminal block box of the ventilator according to the embodiment as viewed from a front side of the cord clip. When the cord clip 84 is attempted to be attached or detached while the external power supply line 90 is connected to the terminal block 83, it is difficult to access the cord clip 84 from a front side of the terminal block 83 because the external power supply line 90 and the terminal block 83 act as obstacles. However, since the cord clip 84 is mounted such that the direction that forms the angle A3 with respect to the front direction of the terminal block 83 becomes the front direction, there is no obstacle on the front side of the cord clip 84, and it is easy to access the screw 84a that fixes the cord clip 84. As a result, even if the height from the outer surface 70a to the cord clip 84 is lower than the height from the outer surface 70a to the terminal block 83, it is possible to access the screw 84a that fixes the cord clip 84, and consequently, a mounting space can be reduced in a direction perpendicular to the outer surface 70a, and the wiring space can be reduced.

By making the terminal block mounting plate 81 including the terminal block mounting surface 81a and the cord clip mounting surface 81b as a component separate from the electrical equipment case 71, the electrical equipment case 71 itself can be formed into a simple box shape to reduce processing cost. In addition, if the terminal block mounting plate 81 is a separate component from the electrical equipment case 71, the electrical equipment case 71 can be diverted to a model that does not use the terminal block 83, so that cost reduction can be achieved by commonality of components. However, the terminal block mounting plate 81 may be integrated with the electrical equipment case 71, and the terminal block mounting surface 81a and the cord clip mounting surface 81b may be formed by bending the electrical equipment case 71.

The configurations described in the embodiment above are merely examples of the content of the present invention and can be combined with other known technology and part thereof can be omitted or modified without departing from the scope of the present invention which is defined solely by the appended claims.

### Reference Signs List

1 ventilator; 10 front panel; 11 indoor air outlet; 12A, 12B indoor air inlet; 20 front casing; 21 supply air opening; 22 exhaust air opening; 30 back casing; 31 outdoor air inlet; 32 outdoor air outlet; 40 inner casing; 41 supply air flow path; 42 exhaust air flow path; 50A, 50B blower; 51A, 51B motor; 52A, 52B impeller; 53 motor mounting plate; 60 heat exchanger; 70 electrical equipment box; 70a outer surface; 71 electrical equipment case; 72 electrical equipment cover; 73 electronic substrate; 80 terminal block box; 81 terminal block mounting plate; 81a terminal block mounting surface; 81b cord clip mounting surface; 81c, 84a screw; 82 terminal block cover; 83 terminal block; 83a one end portion-side side surface; 83b other end portion-side side surface; 83c external power supply line connection terminal; 83d internal electric wire connection terminal; 84 cord clip; 85 cord bushing; 90 external power supply line; 91 internal electric wire.

## Claims

1. A ventilator (1) including, in a main body thereof, an electrical equipment box (70) that includes: an electrical equipment case (71) in which an electronic component (73) that drives blowers (50A, 50B) is disposed; and an electrical equipment cover (72) that covers the electrical equipment case (71) and the electronic component (73), the ventilator (1) comprising:
a terminal block mounting plate (81) to which a terminal block (83) is mounted, the terminal block (83) including an external power supply line connection terminal (83c) that connects an external power supply line (90) at one end portion and an internal electric wire connection terminal that connects an internal electric wire connected to the electronic component (73) at the other end portion, wherein the terminal block mounting plate (81) includes a terminal block mounting surface (81a) that holds the terminal block (83) in a state where a direction in which a side surface on a side of the one end portion of the terminal block faces has an angle (α) with respect to an outer surface (70a) of the electrical equipment box (70) in a direction external to the electrical equipment box (70), and a direction in which a side surface on a side of the other end portion of the terminal block faces has an angle (α) with respect to the outer surface (70a) in a direction internal to the electrical equipment box (70), **characterized in that** the ventilator (1) comprises:
a cord clip (84) to fix the external power supply line (90), wherein the cord clip (84) fixes the external power supply line (90) to be perpendicular (A2) to the outer surface (70a), and the external power supply line (90) is held by the cord clip (84) in a state where a portion connected to the external power supply line connection terminal (83c) has an angle (α) with respect to the outer surface (70a) in a direction external to the electrical equipment box (70).

2. The ventilator (1) according to claim 1, wherein the terminal block mounting plate (81) holds the terminal block (83) in a state where the other end portion is entered into the electrical equipment box (70), and the one end portion is protruding from the electrical equipment box (70).

3. The ventilator (1) according to claim 1 or 2, wherein the cord clip is mounted to the terminal block mounting plate (81) such that a direction that has an angle (A3) with respect to a front direction of the terminal block (83) is employed as a front direction.

4. The ventilator (1) according to any one of claims 1 to 3, wherein the terminal block mounting plate (81) is integrated with the electrical equipment case (71).

## Patentansprüche

1. Ventilator (1) einschließlich eines, in einem Hauptkörper davon, elektrischen Gerätekastens (70), der umfasst: ein elektrisches Gerätegehäuse (71), in welchem eine elektronische Komponente (73), die Gebläse (50A, 50B) ansteuert, angeordnet ist; und eine elektrische Geräteabdeckung (72), die das elektrische Gerätegehäuse (71) und die elektronische Komponente (73) abdeckt, wobei der Ventilator (1) aufweist:
eine Anschlussblockmontageplatte (81), an welcher ein Anschlussblock (83) montiert ist, wobei der Anschlussblock (83) einen externen Energieversorgungsleitungs-Verbindungsanschluss (83c) umfasst, der eine externe Energieversorgungsleitung (90) bei einem Endabschnitt und einen internen elektrischen Leitungsverbindungsanschluss verbindet, der einen internen elektrischen Anschluss, der mit der elektronischen Komponente (73) verbunden ist, bei dem anderen Endabschnitt verbindet, wobei die Anschlussblockmontageplatte (81) eine Anschlussblockmontagefläche (81a) umfasst, die den Anschlussblock (83) in einem Zustand hält, wo eine Richtung, in die eine Seitenfläche auf einer Seite des einen Endabschnitts des Anschlussblocks gewandt ist, einen Winkel (α) in Bezug auf eine äußere Fläche (70a) des elektrischen Gerätekastens (70) in einer Richtung extern zum elektrischen Gerätekasten (70) aufweist, und wobei eine Richtung, in der eine Seitenfläche auf einer Seite des anderen Endabschnitts des Anschlussblocks gewandt ist, einen Winkel (α) in Bezug auf die äußere Fläche (70a) in einer Richtung intern zum elektrischen Gerätekasten (70) aufweist, **dadurch gekennzeichnet, dass** der Ventilator (1) aufweist:
eine Kabelklemme (84) zum Fixieren der externen Energieversorgungsleitung (90), wobei die Kabelklemme (84) die externe Energieversorgungsleitung (90) fixiert, um senkrecht (A2) zur äußeren Fläche (70a) zu sein, und wobei die externe Energieversorgungsleitung (90) durch die Kabelklemme (84) in einem Zustand gehalten wird, wo ein Abschnitt, der mit dem externen Energieversorgungsleitungs-Verbindungsanschluss (83c) verbunden ist, einen Winkel (α) in Bezug auf die äußere Fläche (70a) in einer Richtung extern zum elektrischen Gerätekasten (70) aufweist.

2. Ventilator (1) nach Anspruch 1, wobei die Anschlussblockmontageplatte (81) den Anschlussblock (83) in einem Zustand hält, wo der andere Endabschnitt in den elektrischen Gerätekasten (70) eingeführt ist und der andere Endabschnitt aus dem elektrischen Gerätekastens (70) vorsteht.

3. Ventilator (1) nach Anspruch 1 oder 2, wobei die Kabelklemme an der Anschlussblockmontageplatte (81) derart montiert ist, dass eine Richtung, die einen Winkel (A3) in Bezug auf eine vordere Richtung des Anschlussblocks (83) aufweist, als eine vordere Richtung angewendet wird.

4. Ventilator (1) nach einem der Ansprüche 1 bis 3, wobei die Anschlussblockmontageplatte (81) in das elektrische Gerätegehäuse (71) integriert ist.

## Revendications

1. Ventilateur (1) incluant, dans un corps principal correspondant, un coffret (70) d'équipement électrique qui inclut : un boitier (71) d'équipement électrique dans lequel un composant électronique (73) qui pilote des soufflantes (50A, 50B) est placé ; et un couvercle (72) d'équipement électrique qui recouvre le boitier (71) d'équipement électrique et le composant électronique (73), le ventilateur (1) comprenant :
une plaque de fixation (81) de bloc de bornes à laquelle un bloc de bornes (83) est fixé, le bloc de bornes (83) incluant une borne de connexion de ligne d'alimentation en énergie externe (83c) qui connecte une ligne d'alimentation en énergie externe (90) au niveau d'une certaine partie terminale et une borne de connexion de fil électrique interne qui connecte un fil électrique interne connecté au composant électronique (73) au niveau de l'autre partie terminale, la plaque de fixation (81) de bloc de bornes incluant une surface de fixation (81a) de bloc de bornes qui maintient le bloc de bornes (83) dans un état où une direction dans laquelle une surface latérale, sur un côté de la certaine partie terminale du bloc de bornes, est orientée a un angle (α) par rapport à une surface extérieure (70a) du coffret (70) d'équipement électrique dans une direction externe au coffret (70) d'équipement électrique, et une direction dans laquelle une surface latérale, sur un côté de l'autre partie terminale du bloc de bornes, est orientée a un angle (α) par rapport à la surface extérieure (70a) dans une direction interne au coffret (70) d'équipement électrique, **caractérisé en ce que** le ventilateur (1) comprend :
une bride de cordon (84) pour attacher la ligne d'alimentation en énergie externe (90), la bride de cordon (84) attachant la ligne d'alimentation en énergie externe (90) de manière à être perpendiculaire (A2) à la surface extérieure (70a), et la ligne d'alimentation en énergie externe (90) étant maintenue par la bride de cordon (84) dans un état où une partie connectée à la borne de connexion de ligne d'alimentation en énergie externe (83c) a un angle (α) par rapport à la surface extérieure (70a) dans une direction externe au coffret (70) d'équipement électrique.

2. Ventilateur (1) selon la revendication 1, la plaque de fixation (81) de bloc de bornes maintenant le bloc de bornes (83) dans un état où l'autre partie terminale est introduite dans le coffret (70) d'équipement électrique, et la certaine partie terminale fait saillie hors du coffret (70) d'équipement électrique.

3. Ventilateur (1) selon la revendication 1 ou 2, la bride de cordon étant fixée à la plaque de fixation (81) de bloc de bornes de telle sorte qu'une direction qui a un angle (A3) par rapport à une direction avant du bloc de bornes (83) est utilisée comme une direction avant.

4. Ventilateur (1) selon l'une quelconque des revendications 1 à 3, la plaque de fixation (81) de bloc de bornes étant intégrée au boitier (71) d'équipement électrique.
